# EUROPÄISCHE PATENTSCHRIFT

(11) **EP 1 828 612 B1**
(45) Veröffentlichungstag und Bekanntmachung des Hinweises auf die Patenterteilung: **03.06.2009**
(21) Anmeldenummer: 05825549.8
(22) Anmeldetag: 13.12.2005
(51) Int. Cl.: F04C 29/00

(54) **KOMPAKTER SCHRAUBENKOMPRESSOR ZUM MOBILEN EINSATZ IN EINEM FAHRZEUG**
COMPACT HELICAL COMPRESSOR FOR MOBILE USE IN A VEHICLE
COMPRESSEUR HELICOIDAL COMPACT DESTINE A L'UTILISATION MOBILE DANS UN VEHICULE

(30) Priorität: 14.12.2004 DE 102004060417
(43) Veröffentlichungstag der Anmeldung: 05.09.2007
(73) Patentinhaber: KNORR-BREMSE Systeme für Schienenfahrzeuge GmbH, 80809 München (DE)
(72) Erfinder: KÖCK, Engelbert, 82152 Planegg (DE)
(74) Vertreter: Mattusch, Gundula
(86) Internationale Anmeldenummer: PCT/EP2005/013356
(87) Internationale Veröffentlichungsnummer: WO 2006/063788

(56) Entgegenhaltungen:
- WO-A-02/070291
- CH-A5- 559 117
- DE-A1- 3 422 398
- DE-U1-2202004 003 53
- US-A- 3 811 805
- W. BEITZ, K.-H. KÜTTER: "Dubbel, Taschenbuch für den Maschinenbau" 1987, SPRINGER VERLAG , BERLIN , XP002373039 Seite G66, Spalte G68

## Beschreibung

Die vorliegende Erfindung betrifft einen kompakten Schraubenkompressor zum mobilen Einsatz in einem Kraftfahrzeug mit einer von einer Motoreinheit angetriebenen Schraubenverdichtereinheit.

In der Fahrzeugtechnik kommen überall dort Schraubenkompressoren zum Einsatz, wo trotz beengter Platzverhältnisse Druckluft zur Speisung eines Druckluft-Bordnetzes erzeugt werden muss. Das an sich bekannte Bauprinzip eines Schraubenkompressors eignet sich von Hause aus für eine besonders kompakte Bauweise und ist beispielsweise in der DE 34 22 398 A1 beschrieben.

Aus dem allgemeinen Stand der Technik ist bekannt, dass die in Fahrzeugen - wie Nutzfahrzeugen oder Schienenfahrzeugen - verwendeten Schraubenkompressoren über das Antriebsaggregat des Fahrzeuges - beispielsweise einem Dieselmotor - angetrieben werden. Dies kann entweder durch direkte Ankopplung einer Schraubenverdichtereinheit an diese Motoreinheit erfolgen, wie beispielsweise in der US 3,811,805 als vorteilhafte Ausgestaltung beschrieben. Alternativ hierzu ist es jedoch auch möglich, zwischen dem Antriebsaggregat des Fahrzeuges als Motoreinheit und der Schraubenverdichtereinheit ein Getriebe mit fester Übersetzung vorzusehen. Gewöhnlich ist ein solches Getriebe als Keilriemengetriebe ausgebildet.

Ein Nachteil dieses Standes der Technik besteht darin, dass die von der Schraubenverdichtereinheit erzeugte Förderleistung an Druckluft abhängig von der Drehzahl des Antriebsaggregats des Fahrzeuges ist. So sinkt die Förderleistung der Schraubenverdichtereinheit beim Abtouren des Antriebsaggregats, also beispielsweise, wenn das Fahrzeug abgebremst wird. Umgekehrt steigt die Förderleistung der Schraubenverdichtereinheit mit steigender Drehzahl des Antriebsaggregats, beispielsweise, wenn das Fahrzeug beschleunigt wird. In Folge dessen kann das Problem auftreten, dass in Betriebspunkten, in denen ein großer Druckluftbedarf des Fahrzeuges besteht (z.B. beim Bremsen) jedoch nur eine geringe Ausgangsdrehzahl des Antriebsaggregats zur Erzeugung entsprechender Fördervolumen an Druckluft zur Verfügung steht, die bedarfsgerechte Bereitstellung von Druckluft nicht garantierbar ist.

Um dieses Problem zu lösen, ist bisher versucht worden, das Druckluftnetz eines Fahrzeuges mit ausreichend großen Speicherbehältern für Druckluft auszustatten, aus welchen bei Bedarfsspitzen die erforderliche Druckluft zur Verfügung steht. Allerdings hat diese Lösung zum Nachteil, dass solche Druckluftbehälter ein entsprechend großes Bauvolumen im Fahrzeug benötigen, was dem Ziel einer möglichst insgesamt kompaktbauenden Druckluftanlage entgegensteht.

Es ist daher die Aufgabe der vorliegenden Erfindung, einen kompakten Schraubenkompressor zum mobilen Einsatz in einem Fahrzeug zu schaffen, dessen Förderleistung an Druckluft weitestgehend unabhängig von der schwankenden Drehzahl des Antriebsaggregats ist.

Die Aufgabe wird ausgehend von einem kompakten Schraubenkompressor gemäß Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Drehzahl der allein der Schraubenverdichtereinheit zugeordneten und als regelbarer Hydroantrieb ausgebildeten Motoreinheit nach Maßgabe einer Regeleinheit derart einstellbar ist, dass die Schraubenverdichtereinheit unabhängig vom Antriebsaggregat des Fahrzeuges eine vorgegebene Förderleistung an Druckluft erzeugt, wobei die Schraubenverdichtereinheit ein spezielles, an nachfolgender Stelle detaillierter beschriebenes mehrteiliges Gehäuse aufweist.

Der Vorteil des erfindungsgemäß bedarfsgerecht regelbaren Antriebs des Schraubenkompressors liegt darin, dass auch in Betriebspunkten, in denen ein großer Druckluftbedarf, jedoch nur eine geringe Ausgangsdrehzahl des Antriebsaggregats des Fahrzeuges zur Verfügung steht, eine ausreichende Förderleistung an Druckluft erzeugbar ist. Auf großbauende zusätzliche Druckluftbehälter kann weitestgehend verzichtet werden.

Durch den Einsatz der erfindungsgemäßen Regeleinheit kann die Förderleistung und damit die Leistungsaufnahme des erfindungsgemäßen Schraubenkompressors exakt auf die Anforderungen einer geeigneten Motoreinheit eingestellt und jederzeit ohne weitere Nachrüstung mechanischer Bauteile auf sich ändernde Anforderungen im Betrieb angepasst werden, wie dieses beispielsweise bei wechselndem Einsatz von Bussen im öffentlichen Innenstadt- oder Außerbezirksverkehr nötig ist.

Der Einsatz des regelbaren Hydroantriebs erlaubt ein energiesparendes Stillsitzen des erfindungsgemäßen Schraubenkompressors, ohne verschleißbehaftete Kupplungselemente, lediglich über eine von der Regeleinheit veranlasste Änderung des Schwenkwinkels an der Hydropumpe des Hydroantriebes.

Der regelbare Hydroantrieb besteht erfindungsgemäß aus einem direkt an die Schraubenverdichtereinheit angeflanschten Hydromotor, den eine verstellbare Hydropumpe mit dem für den Betrieb erforderlichen Druckmittel versorgt, wobei die Ansteuerung der verstellbaren Hydropumpe durch die Reglereinheit bewirkt wird. Alternativ zu dem nichtregelbaren Hydromotor an der Schraubenverdichtereinheit kann hierfür auch ein regelbarer Hydromotor vorgesehen werden, falls ein permanent vorhandener Kreislauf zur Verfügung steht.

Erfindungsgemäß besteht die Schraubenverdichtereinheit aus vorzugsweise drei Gehäuseteilen, welche durch Aneinandermontage außenleitungsfrei miteinander verbunden sind und insgesamt die Schraubenverdichtereinheit bilden. Die Gehäuseteile sind vorzugsweise aus gegossenem Metall ausgeführt. Innerhalb der Gehäuseteile lassen sich zahlreiche Funktionen platzsparend unterbringen. Des Weiteren entfallen durch diese Bauweise sämtliche Außenverrohrungen der Kompressorfunktionen.

Ein erstes Gehäuseteil des mehrteiligen Gehäuses umfasst mindestens ein Ansaugrückschlagventil, mit nachgeschalteter Verdichterschraubenanordnung, mit nachgeschalteter Ölvorabscheidereinheit, enthaltend Ölsumpf mit Schwabdämpfung, mit nachgeschalteter Druckentlastungseinheit (bei Abschaltung). All diese Funktionsteile der Schraubenverdichtereinheit lassen sich in einem gemeinsamen ersten Gehäuseteil effizient integrieren.

In einem dem ersten Gehäuseteil zugeordneten zweiten Gehäuseteil ist die Ausströmkontur der Schraubenverdichtereinheit ausgeformt, sowie vorzugsweise auch Mittel zur Ölrückfiihrung aus dem Ölsumpf, mindestens ein Ölfilter mit optionalem Ölthermostat und mindestens ein Öleinfüllstutzen vorhanden.

Mit den vorgenannten beiden Gehäuseteilen lässt sich ein drittes Gehäuseteile kombinieren, welches zumindest Mittel zur Aufnahme eines Ölfeinstfilters, und vorzugsweise auch Mittel zur Ölabsaugung, Druckhalteventilmittel sowie Rückschlagventilmittel enthält.

Bei der erfindungsgemäß aus den drei vorstehend genannten Gehäuseteilen mit jeweils integrierten Bauteilen bestehenden Schraubenverdichtereinheit können sämtliche Außen- und Innenverrohrungen entfallen, welche ansonsten insbesondere zur Druckentlastung beim Abschalten, zur Ölrückführung vom Feinabscheider, etc., üblich sind.

Gemäß einer weiteren, die Erfindung verbessernden Maßnahme ist vorgesehen, dass der Hydromotor mittels einer Mitnehmerscheibe an die Schraubenverdichtereinheit angekoppelt ist, in welche die Wellenenden von Hydromotor und Schraubenverdichtereinheit eingreifen, wobei die Mitnehmerscheibe durch einen Ölkreislauf oder eine Dauerfettschmierung gedämpft und geschmiert wird. Durch Verwendung einer derartigen gedämpften Mitnehmerscheibe ist eine besonders verschleißfreie Ankopplung des Hydromotors an der Schraubenverdichtereinheit sichergestellt. Üblicherweise werden zu diesem Zwecke elastische Kupplungen oder starre Kupplungen verwendet, sofern kein übersetzender Antrieb über Keilriemen oder Getriebe erfolgt. All diese Kupplungsmittel unterliegen einem Verschleiß bzw. ermöglichen lediglich eine starre Verbindung zwischen den Baugruppen Hydromotor und Schraubenverdichtereinheit.

Gemäß einer anderen, die Erfindung verbessernden Maßnahme kann der Ölkreislauf, welcher zur Kühlung der Schraubenverdichtereinheit erforderlich ist, über einen Wärmetauscher mit einem thermostatisch geregelten Kühlkreislauf des Fahrzeuges gekoppelt werden. Durch diese Maßnahme kann auf eine eigene Temperaturregelung des Ölkreislaufs zur Kühlung der Schraubenverdichtereinheit gänzlich verzichtet werden. Als Kühlkreislauf des Fahrzeuges kann der Kühlkreislauf zur Schmierung der Fahrzeugwelle, Differential, etc. oder der Motorkühlkreis genutzt werden. Hierdurch bedingt ergibt sich auch die Möglichkeit einer direkten Anbindung des Wärmetauschers an die Schraubenverdichtereinheit oder alternativ hierzu am Antriebsaggregat des Fahrzeuges.

Weitere die Erfindung verbessernden Maßnahmen werden nachstehend gemeinsam mit der Beschreibung eines bevorzugten Ausführungsbeispiels der Erfindung anhand der Figuren näher dargestellt. Es zeigt:
- Fig.1: eine Blockschaltbilddarstellung eines Schraubenkompressors mit peripheren Baugruppen,
- Fig.2: eine perspektivische Außenansicht eines kompakten Schraubenkompressors, und
- Fig.3: eine graphische Darstellung einer Anpassung der bedarfsgerechten Förderleistung an Druckluft durch entsprechende Regelung.

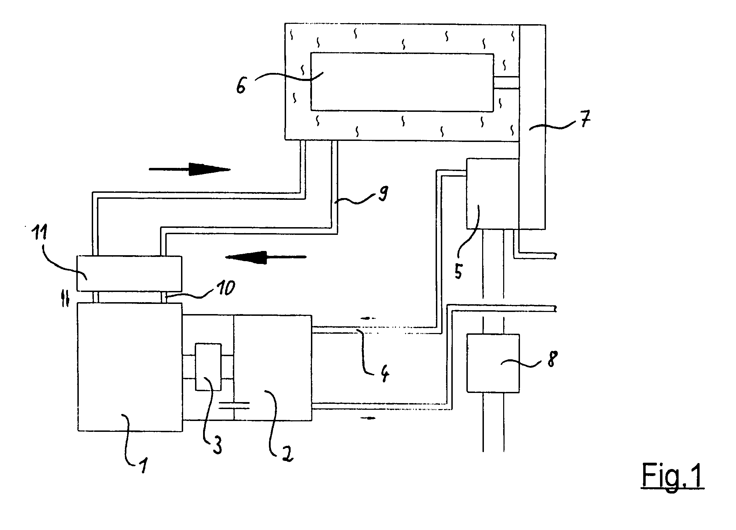

Gemäß Fig.1 besteht der Schraubenkompressor aus einer Schraubenverdichtereinheit 1, die von einem Hydromotor 2 angetrieben wird. Dabei ist der Hydromotor 2 mittels einer Mitnehmerscheibe 3 an die Schraubenverdichtereinheit 1 angekoppelt. In die Mitnehmerscheibe 3 greifen die beiden Wellenenden von Hydromotor 2 bzw. Schraubenverdichtereinheit 1 ein. Die Mitnehmerscheibe 3 ist durch einen - hier nicht weiter dargestellten - Ölkreislauf gedämpft und geschmiert. Der Hydromotor 2 ist direkt an die Schraubenverdichtereinheit 1 angeflanscht.

Der Hydromotor 2 wird über eine in Hin- und Rücklauf unterteilte Ölleitung 4 mit dem für den Betrieb erforderlichen Druckmittel versorgt. Hierfür dient eine die Ölleitung 4 speisende verstellbare Hydropumpe 5. Der Antrieb der Hydropumpe 5 erfolgt über einen Nebanabtrieb des Antriebsaggregats 6 vom Fahrzeug mit einem zwischengeschalteten Getriebe 7, das hier nach Art eines Zahnradgetriebes ausgebildet ist. Die Ansteuerung der verstellbaren Hydropumpe 5, d.h. die zu diesem Zwecke dienende Winkelverstellung des Antriebsteils erfolgt nach Maßgabe einer elektronischen Reglereinheit 8. Durch diese Anordnung wird erreicht, dass die von der Schraubenverdichtereinheit 1 erbrachte Förderleistung an Druckluft unabhängig von der Drehzahl des Antriebsaggregats 6 des Fahrzeuges ist.

Die Schraubenverdichtereinheit 1 wird hier über den Kühlkreislauf 9 des - nicht weiter dargestellten Fahrzeugs - gekühlt. Zu diesem Zwecke ist der zur Kühlung der Schraubenverdichtereinheit 1 erforderliche Ölkreislauf 10 über einen Wärmetauscher 11 mit dem thermostatisch geregelten Kühlkreislauf 9 des Fahrzeuges gekoppelt.

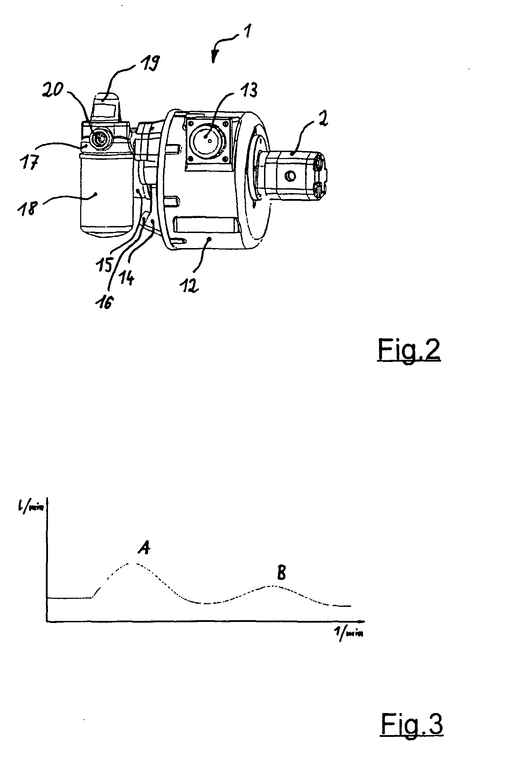

Die Fig.2 zeigt den kompakten Schraubenkompressor mit an der Schraubenverdichtereinheit 1 angeflanschtem Hydromotor 2. Die Schraubenverdichtereinheit 1 besteht aus einem mehrteiligen Gehäuse, wobei ein erstes Gehäuseteil 12 ein Ansaugrückschlagventil 13, mit nachgeschalteter - hier nicht erkennbarer - innenliegender Verdichterschraubenanordnung, mit nachgeschalteter innenliegender Ölvorabscheidereinheit (enthaltend Ölsumpf mit Schwabdämpfung), mit nachgeschalteter Druckentlastungseinheit enthält. Ein zweites Gehäuseteil 14 der Schraubenverdichtereinheit 1 verkörpert die Ausströmkontur der Schraubenverdichtereinheit 1 und besitzt Mittel zur Ölrückführung aus dem Ölsumpf des ersten Gehäuseteils 12 sowie ein Ölfilterkopf 15. Benachbart zum Ölfilterkopf 15 ist am zweiten Gehäuseteil 14 ein Öleinfüllstutzen 16 angeordnet. Ein drittes Gehäuseteil 17 ist mit Mitteln zur Aufnahme eines Ölfeinstfilters 18 ausgestattet. Am dritten Gehäuseteil 17 ist ebenfalls ein Druckhalteventil 19 sowie ein Rückschlagventil 20 angeordnet. (All diese Funktionsteile sind bekannte Funktionseinheiten von Schraubenkompressoren und brauchen daher nicht einzeln in ihrem Zusammenwirken an dieser Stelle beschrieben werden.)

Im Diagramm nach Fig.3 ist die Förderleistung in l/min des kompakten Schraubenkompressors der vorstehend beschriebenen Art über die Drehzahl l/min des Antriebsaggregats des Fahrzeugs dargestellt. Erkennbar ist, dass unabhängig von der Drehzahl des Antriebsaggregats die Förderleistung an Druckluft für zwei Hauptbedarfsbereiche A und B erbringbar ist. Dies ermöglicht - wie vorstehend im Detail beschreiben -die Regeleinheit, welche für eine bedarfsgerechte Verstellung des regelbaren Hydroantriebs sorgt.

### Bezugszeichenliste

- 1: Schraubenverdichtereinheit
- 2: Hydromotor
- 3: Mitnehmerscheibe
- 4: Ölleitung
- 5: Hydropumpe
- 6: Antriebsaggregat
- 7: Getriebe
- 8: Regeleinheit
- 9: Kühlkreislauf
- 10: Ölkreislauf
- 11: Wärmetauscher
- 12: erstes Gehäuseteil
- 13: Ansaugrückschlagventil
- 14: zweites Gehäuseteil
- 15: Ölfilterkopf
- 16: Einfüllstutzen
- 17: drittes Gehäuseteil
- 18: Ölfeinstfilter
- 19: Druckhalteventil
- 20: Rückschlagventil

## Patentansprüche

1. Kompakter Schraubenkompressor (1, 2) zur Speisung eines Druckluft-Bordnetzes in einem Fahrzeug mit einer von einer Motoreinheit angetriebenen Schraubenverdichtereinheit (1), wobei die Motoreinheit nach Art eines regelbaren Hydroantriebs (2, 5) ausgebildet ist, **dadurch gekennzeichnet, dass** der Hydroantrieb aus einem direkt an die Schraubenverdichtereinheit (1) angeflanschten Hydromotor (2) besteht, den eine verstellbare Hydropumpe (5) mit dem für den Betrieb erforderlichen Druckmittel über eine Ölleitung (4) versorgt, wobei die Ansteuerung der verstellbaren Hydropumpe (5) durch eine Reglereinheit (8) erfolgt, und wobei die Drehzahl der allein der Schraubenverdichtereinheit (1) zugeordneten Motoreinheit nach Maßgabe der Regeleinheit (8) derart einstellbar ist, dass die Schraubenverdichtereinheit (1) unabhängig vom Antriebsaggregat (6) des Fahrzeuges eine vorgegebene Förderleistung an Druckluft erzeugt, wobei die Schraubenverdichtereinheit (1) aus einem mehrteiligen Gehäuse besteht, dessen erstes Gehäuseteil (12) mindestens ein Ansaugrückschlagventil (13), mit nachgeschalteter Verdichterschraubenanordnung, mit nachgeschalteter Ölvorabscheidereinheit enthält, und dessen zweites Gehäuseteil (14) die Ausströmkontur der Schraubenverdichtereinheit (1) enthält, und dessen drittes Gehäuseteil (17) Mittel zur Aufnahme eines Ölfeinstfilters (18) enthält.

2. Kompakter Schraubenkompressor nach Anspruch 1,
**dadurch gekennzeichnet, dass** die Ölvorabscheidereinheit einen Ölsumpf mit Schwappdämpfung mit nachgeschalteter Druckentlastungseinheit bei Abschaltung enthält.

3. Kompakter Schraubenkompressor nach Anspruch 1,
**dadurch gekennzeichnet, dass** das zweite Gehäuseteil (14) ferner Mittel zur Ölrückführung aus dem Ölsumpf, mindestens einen Ölfilterkopf (15) sowie mindestens einen Öleinfüllstutzen (16) enthält.

4. Kompakter Schraubenkompressor nach Anspruch 1,
**dadurch gekennzeichnet, dass** das dritte Gehäuseteil (17) ferner Mittel zur Ölabsaugung, Druckhalteventil (19) sowie Rückschlagventil (20) enthält.

5. Kompakter Schraubenkompressor nach Anspruch 1,
**dadurch gekennzeichnet, dass** die drei Gehäuseteile (12, 14, 17) durch Aneinandermontage außenleitungsfrei miteinander verbunden sind, um die Schraubenverdichtereinheit (1) zu bilden.

6. Kompakter Schraubenkompressor nach Anspruch 1,
**dadurch gekennzeichnet, dass** der Hydromotor (2) mittels einer Mitnehmerscheibe (3) direkt an die Schraubenverdichtereinheit (1) angekoppelt ist, in welche die Wellenenden von Hydromotor (2) und Schraubenverdichtereinheit (1) eingreifen, wobei die Mitnehmerscheibe (3) durch einen Ölkreiskauf oder eine Dauerfettschmierung gedämpft und geschmiert ist.

## Claims

1. Compact helical compressor (1,2) for feeding an on-board compressed air system in a vehicle, with a helical compressor unit (1) powered by a motor unit made as a controllable hydro-drive (2, 5),
**characterised in that** the hydro-drive consists of a hydro-motor connected directly to the helical compressor unit (1), which is supplied with the pressure medium required for its operation, via an oil line (4), by an adjustable hydro-pump (5), the adjustable hydro-pump (5) being controlled by a regulator unit (8), such that the speed of the motor unit associated solely with the helical compressor unit (1) can be adjusted in accordance with the regulator unit (8) in such manner that independently of the vehicle's drive aggregate (6) the helical compressor unit (1) produces a specified compressed air delivery performance, the said helical compressor unit (1) consisting of a multi-component housing whose first housing portion (12) contains at least an inlet one-way valve (13) with a downstream compressor helix arrangement and, downstream from that, an oil pre-separator unit, and whose second housing portion (14) contains the outflow contour of the helical compressor unit (1), and whose third housing portion (17) contains means for the accommodation of an ultra-fine oil filter (18).

2. Compact helical compressor according to Claim 1,
**characterised in that** the oil pre-separator unit comprises an oil sump with wobble damping and a downstream pressure relief unit when switched off.

3. Compact helical compressor according to Claim 1,
**characterised in that** the second housing portion (14) also contains means for returning oil from the oil sump, at least one oil filter head (15) and at least one oil filling connection (16).

4. Compact helical compressor according to Claim 1,
**characterised in that** the third housing portion (17) also contains means for drawing off oil, a pressure maintenance valve (19) and a one-way valve (20).

5. Compact helical compressor according to Claim 1,
**characterised in that** the three housing portions (12, 14, 17) are joined to one another by assembly with one another without any external lines, to form the said helical compressor unit (1).

6. Compact helical compressor according to Claim 1,
**characterised in that** the hydro-motor (2) is coupled by means of a drive plate (3) directly to the helical compressor unit (1), in which the shaft ends of the hydro-motor (2) and the helical compressor unit (1) engage, the said drive plate (3) being damped and lubricated by an oil circuit or by permanent grease lubrication.

## Revendications

1. Compresseur (1, 2) hélicoïdal compact pour l'alimentation d'un réseau de bord d'air comprimé d'un véhicule automobile, comprenant un groupe (1) compresseur hélicoïdal entraîné par un groupe moteur, le groupe moteur étant constitué à la manière d'une commande (2, 5) hydraulique réglable, **caractérisé en ce que** la commande hydraulique est constituée d'un moteur (2) hydraulique bridé au groupe (1) compresseur hélicoïdal, moteur qu'une pompe (5) hydraulique réglable alimente en le fluide sous pression nécessaire pour le fonctionnement par un conduit (4) pour de l'huile, la commande de la pompe (5) hydraulique réglable s'effectuant par une unité (8) de régulation, et dans lequel la vitesse de rotation du groupe moteur associé seulement au groupe (1) compresseur hélicoïdal est réglable en fonction de l'unité (8) de régulation de sorte que le groupe (1) compresseur hélicoïdal produise une puissance de transport d'air comprimé prescrite indépendamment du groupe (6) d'entraînement du véhicule automobile, le groupe (1) compresseur hélicoïdal étant constitué d'une enveloppe en plusieurs parties, dont la première partie (12) comporte au moins un clapet (13) anti retour d'aspiration, ayant un dispositif hélicoïdal de compresseur en aval et un groupe préséparateur d'huile en aval, et dont la deuxième partie (14) comporte le contour de sortie du groupe (1) compresseur hélicoïdal et dont la troisième partie (17) comporte des moyens de logement d'un filtre (18) d'huile très fin.

2. Compresseur hélicoïdal compact suivant la revendication 1,
**caractérisé en ce que** le groupe préséparateur d'huile comporte un puisard d'huile ayant un amortissement des oscillations avec un groupe de soulagement de la pression en aval lors de l'arrêt.

3. Compresseur hélicoïdal compact suivant la revendication 1,
**caractérisé en ce que** la deuxième partie (14) de l'enveloppe comporte en outre des moyens de retour de l'huile du puisard d'huile, au moins une tête (15) de filtre d'huile, ainsi qu'au moins une tubulure (16) de remplissage d'huile.

4. Compresseur hélicoïdal compact suivant la revendication 1,
**caractérisé en ce que** la troisième partie (17) d'enveloppe comporte en outre des moyens d'aspiration d'huile, une vanne (19) de maintien de la pression, ainsi qu'un clapet (20) anti-retour.

5. Compresseur hélicoïdal compact suivant la revendication 1,
**caractérisé en ce que** les trois parties (12, 14, 17) de l'enveloppe sont assemblées entre elles par montage l'une contre l'autre sans conduit extérieur pour former le groupe (1) compresseur hélicoïdal.

6. Compresseur hélicoïdal compact suivant la revendication 1,
**caractérisé en ce que** le moteur (2) hydraulique est couplé au moyen d'un disque (3) d'entraîneur directement au groupe (1) compresseur hélicoïdal dans lequel pénètre les bouts d'arbre du moteur (2) hydraulique et du groupe (1) compresseur hélicoïdal, le disque (3) d'entraîneur étant amorti et lubrifié par un circuit d'huile ou par une lubrification permanente à la graisse.
